# EUROPEAN PATENT SPECIFICATION

(11) **EP 4 650 566 B1**
(45) Date of publication and mention of the grant of the patent: **18.11.2026**
(21) Application number: 25205879.7
(22) Date of filing: 19.02.2021
(51) Int. Cl.: G01D 5/353, E21B 47/06, E21B 47/113, E21B 47/135, G01H 9/00, G01K 11/32, G01V 1/20, G01V 1/22, G01V 1/42

(54) **LONG RANGE OPTICAL FIBER SENSING SYSTEMS**
FASEROPTISCHES ERFASSUNGSSYSTEM MIT GROSSER REICHWEITE
SYSTÈMES DE DÉTECTION À FIBRE OPTIQUE À LONGUE PORTÉE

(30) Priority: 21.02.2020 GB 202002467; 21.02.2020 GB 202002468; 21.02.2020 GB 202002470; 21.02.2020 GB 202002472; 21.02.2020 GB 202002473
(43) Date of publication of application: 19.11.2025
(62) Document number(s) of the earlier application(s) in accordance with Art. 76 EPC: 24153276.1 / 4 354 092; 21708340.1 / 4 107 489
(73) Proprietor: Silixa Ltd., Elstree, Hertfordshire WD6 3SN (GB)
(72) Inventor: FARHADIROUSHAN, Mahmoud, Elstree, WD6 3SN (GB); PARKER, Tom, Elstree, WD6 3SN (GB); SHATALIN, Sergey, deceased (GB); MAXWELL, Jack, Elstree, WD6 3SN (GB)
(74) Representative: Wallin, Nicholas James

(56) References cited:
- WO-A1-2016/087850
- WO-A1-2016/142695
- GB-A- 2 478 915
- US-B2- 10 072 498
- FARHADIROUSHAN M. ET AL: "Advanced Geophysical Measurement Methods Using Engineered Fiber Optic Acoustic Sensor", 3 June 2019 (2019-06-03), Bunnik (NL), pages 1 - 5, XP093347257, Retrieved from the Internet <URL:https://www.earthdoc.org/docserver/fulltext/2214-4609/2019/We_R09_11.pdf?expires=1765804178&id=id&accname=fromqa185&checksum=4662137B4371A35F0619F224C8B877A7> [retrieved on 20251215], DOI: 10.3997/2214-4609.201901247
- ELLMAUTHALER A. ET AL: "Achieving Dry-Tree DAS Bandwidth and SNR Performance on Subsea Wells", 9 March 2020 (2020-03-09), pages 1 - 5, XP093347247, Retrieved from the Internet <URL:https://www.earthdoc.org/docserver/fulltext/2214-4609/2020/fiber-optics/FOSP03.pdf?expires=1765803661&id=id&accname=fromqa185&checksum=F56014DF66D4839AD75D652D7A90DC41#:~:text=Distributed%20acoustic%20sensing%20(DAS)%20affords,repetition%20rate%20of%201%20kHz.> [retrieved on 20251215], DOI: 10.3997/2214-4609.202030014

## Description

### Priority Claim and Divisional Status

This European patent application is a divisional application of EP24153276.1, filed 19 February 2021, and claims priority from United Kingdom patent application No. 2002467.5, filed 21 February 2020.

### Technical Field

The present invention relates to optical fiber sensing systems, such as optical time domain reflectometers (OTDRs), as well as optical fiber distributed acoustic sensors (DASs), and optical fiber distributed temperature sensors (DTSs). Specifically, the present invention provides for long range optical fiber sensing systems where the optical fiber interrogator is positioned well away from the length of sensing fiber along which sensing measurements are to be made, with at least one length of optical pulse transport fiber in between the sensing fiber and the interrogator.

### Background to the Invention and Prior Art

Optical fiber based sensing systems are known already in the art. OTDRs are used to determine fiber condition and properties, such as splice or connector losses and attenuation, whereas DAS and DTS systems use backscatter or reflections from along the fiber to sense acoustic energy incident on the fiber, or ambient temperature around the fiber, as appropriate. An example prior art DAS system is the Silixa^{®} iDAS^{™} system, available from Silixa Ltd, of Elstree, UK, the details of operation of which are available at the URL http://www.silixa.com/technology/idas/, and which is also described in our earlier patent applications WO2010/0136809 and WO2016/142695. An example DTS system is the Silixa^{®} Ultima^{™} system, described at http://www.silixa.com/technology/dts/. At a high level, DAS and DTS systems operate by sending sensing pulses down an optical fiber deployed in the environment which is to be monitored. For a DAS system the vibrations of an incident acoustic wave on the fiber cause modulations in the backscatter or reflections from the fiber as the pulse travels along the fiber. By measuring the backscatter or reflections and detecting such modulation then the incident acoustic wave can be determined. For a DTS system, ambient temperature affects the amount of backscatter or reflections from different parts of the fiber at different ambient temperatures, so that again temperature along the fiber can be inferred by monitoring the backscatter.

At present most optical fiber DAS and DTS systems are limited in range to around 35km or so, due to attenuation in the fiber of both of the outward sensing pulse, and the resulting backscatter along the fiber. Specifically, as a sensing pulse travels along the fiber it will decrease in amplitude (and power), such that backscatter from along the fiber from the pulse will consequentially also be of lower amplitude. Given that the backscatter will itself need to travel back along the fiber to the DAS sensor there is a limit to the range of fiber along which a pulse can be sent, and resulting backscatter determined, before the backscatter hits the sensor noise floor. In a typical DAS or DTS scenario, a range of around 35km would be typical i.e. the DAS or DTS would be able to resolve a signal along approximately 35km of sensing fiber. However, in many cases there are significant additional optical losses, for example from multiple connectors, which significantly further reduces the maximum range.

For many DAS or DTS sensing applications, a 35km range is more than adequate. However, for some applications, and particularly security applications such as pipeline security or area security, a greater range would be useful. In addition, in most cases it is desired to maximise the signal to noise ratio over shorter measurement ranges. Whilst range can of course be increased by the provision of several independent systems (i.e. it would be possible to position a DAS box every 35km along a pipeline), such increases the system deployment cost, and leads to other problems in synchronisation of monitoring of several independent sensor systems of the same type. Our previous patent application WO2016/087850 described an extended range optical fiber sensor, where several lengths of sensing fiber along which sensing measurements are made are joined together in series, with optical amplifiers interspersed along the combined length to maintain the sensing pulses as they travel along the extended length. One downside of having an extended sensing length, however, is that sensor bandwidth is reduced, as the extended length means that the same sensing pulse propagates for longer in the extended length fiber, and hence pulse repetition rate, and hence signal sampling rate, is reduced as ideally only a single pulse should propagate within the length of sensing fiber at once (to allow for ready spatial discrimination of backscatter or reflections from along the fiber).

In some applications, however, it is not necessary to have an extended length of sensing fiber, but the sensing that needs to take place has to take place further from the optical fiber interrogator equipment than the length of a typical sensing fiber. In such a case using an extended length of sensing fiber may in some circumstances be possible, but with the drawback that sensing bandwidth is dramatically reduced, as discussed above. An alternative solution that allows long range optical fiber sensing but with high pulse repetition rates and hence high bandwidth is therefore desirable.

FARHADIROUSHAN M. ET AL in "Advanced Geophysical Measurement Methods Using Engineered Fiber Optic Acoustic Sensor*"* suggests systems and methods for monitoring hydraulically induces strain effects using engineered fibre with bright scatter centers.

US 10072498 B2 suggests a method and fiber optic cable to provide optical pulses for sensing, and an optical telemetry system.

### Summary of Invention

The present disclosure describes a long-range optical fiber distributed sensor system according to claim 1. Advantageous embodiments are described in the dependent claims.

### Brief Description of the Drawings

Further features and advantages of the present invention will become apparent from the following description of an embodiment thereof, presented by way of example only, and by reference to the drawings, wherein like reference numerals refer to like parts, and wherein:

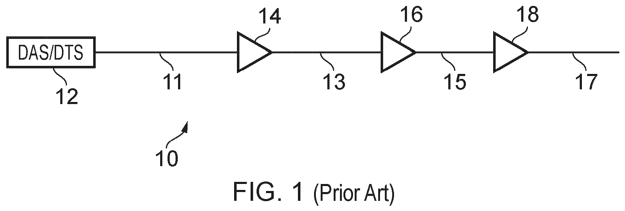

Figure 1 is an example extended range DAS system of the prior art;
Figure 2 is a diagram of a first example of the present disclosure;
Figure 3 is a diagram of a second example of the present disclosure;
Figure 4 is a chart illustrating a property of the second example of the present disclosure;
Figure 5 is a diagram of a third example of the present disclosure;
Figure 6 is a diagram of a fourth example of the present disclosure;
Figure 7 is a diagram of a fifth example of the present disclosure;
Figure 8 is a diagram of a sixth example of the present disclosure;
Figures 9 to 13 are graphs showing how the power in the fiber changes in the different examples;
Figure 14 is a diagram illustrating a first modification that may be made to examples of the present disclosure;
Figure 15 is a diagram illustrating a second modification that may be made to examples of the present disclosure;

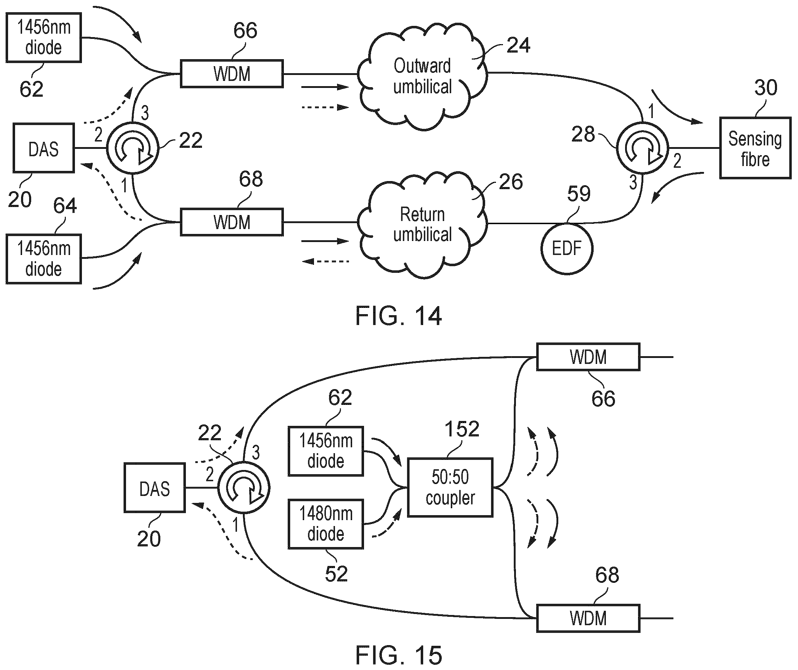

Figure 15 is a diagram illustrating a third modification that may be made to examples of the present disclosure;

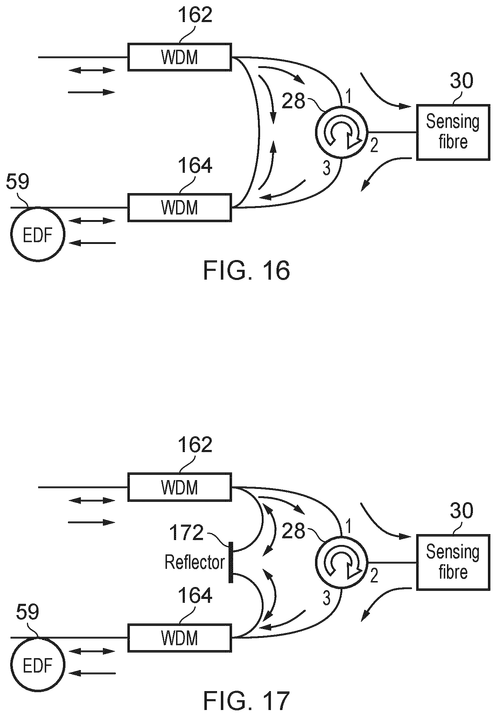

Figure 17 is a diagram illustrating a fourth modification that may be made to examples of the present disclosure; and

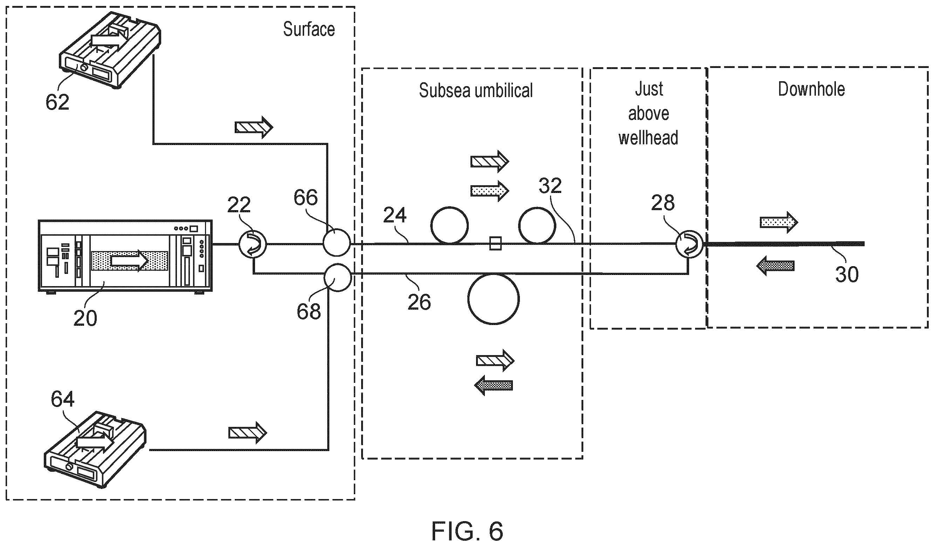

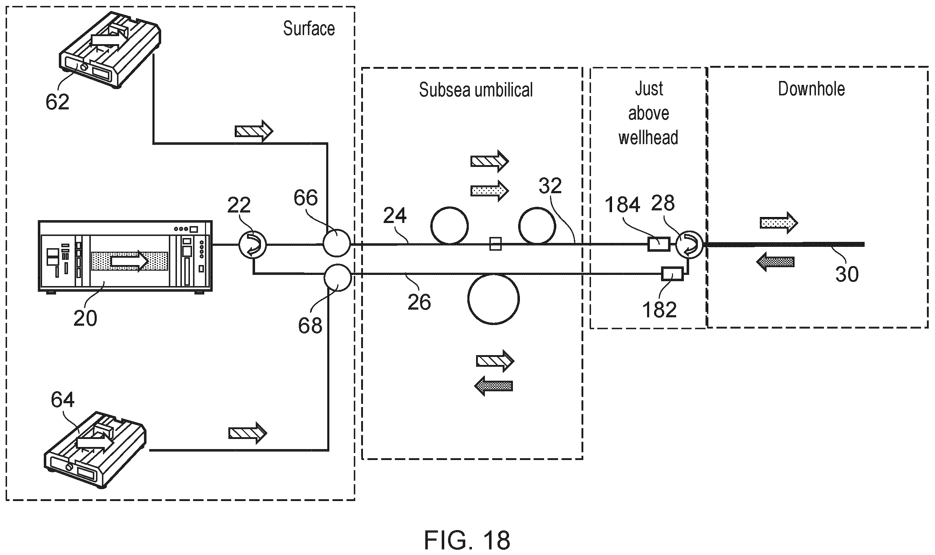

Figure 18 is a diagram of a seventh example of the present disclosure showing a further modification that can be used with any of the examples of Figures 6, 7, or 8 provided with Raman amplification.

### Description of the Embodiments

The present disclosure presents several different examples of a long range optical fiber sensor system. In a first example a long range optical fiber sensor such as a distributed acoustic sensor comprises an optical fiber interrogator to generate pulses to be injected onto the sensing fiber and to receive and process backscatter and/or reflections from along the sensing fiber to determine perturbations caused by acoustic or other vibrational energy incident on the fiber. The sensing fiber is located remote from the interrogator, however, and is not connected directly thereto, instead being located in a geographic region of interest from which measurements are to be taken, for example in a subsea well in a hydrocarbon or carbon dioxide sequestration field, the region of interest being remote from the location of the interrogator. For example, the technique can be employed in situations where the region or asset to be monitored are on land but required to be remote from the interrogator, for example due to environmental conditions or power requirements. The sensing fiber may be used to conduct seismic surveys on the sensing fiber, or to undertake condition monitoring of an asset.

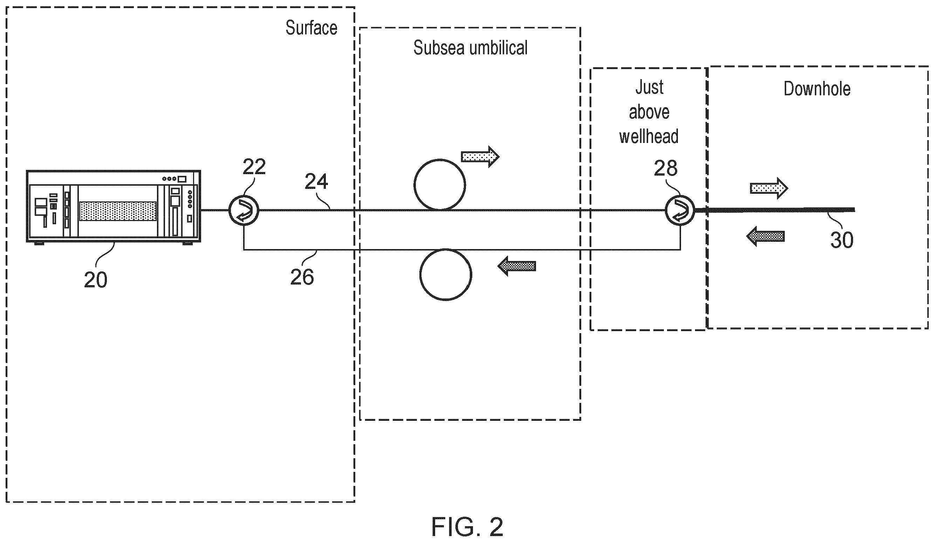

In order to connect the interrogator to the sensing fiber, at least one length of transport fiber is disposed between the interrogator and the sensing fiber, arranged to receive sensing pulses from the interrogator and to transport them and inject them into the sensing fiber. A separate length of transport fiber may be used for the forward and return paths, such that the forward pulses travel from the interrogator to the sensing fiber along a first, forward, length of transport fiber, and then the backscatter and reflections from along the sensing fiber return to the interrogator along a separate return length of transport fiber. Because there is no sensing to be performed from along the lengths of transport fiber then the pulse repetition rate of pulses generated by the interrogator can be at a frequency such that only one pulse is travelling along the sensing fiber at once, but where the transport fiber is longer than the sensing fiber then multiple pulses may be travelling along the transport fiber, separated at least by the pulse propagation time along only the sensing fiber. As such, pulse repetition rate, and hence sensing bandwidth is increased. Further details will be described later with respect to Figure 2.

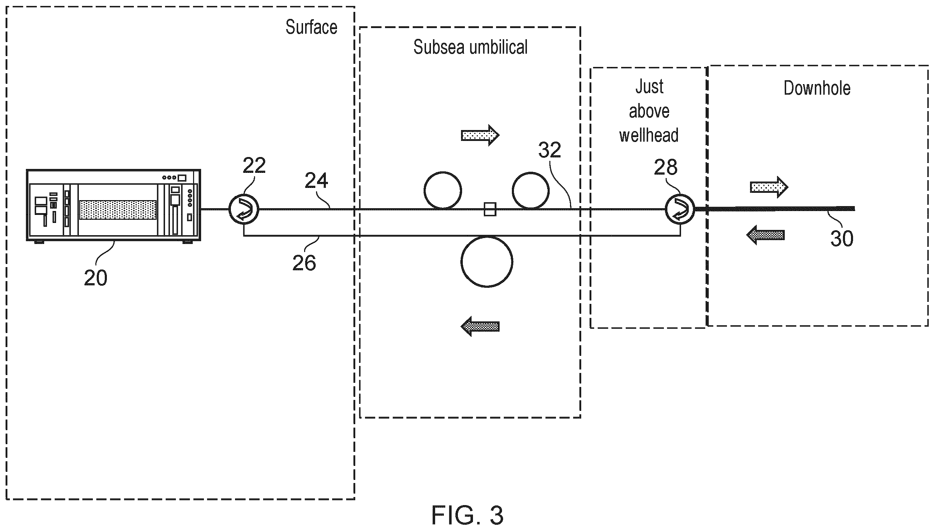

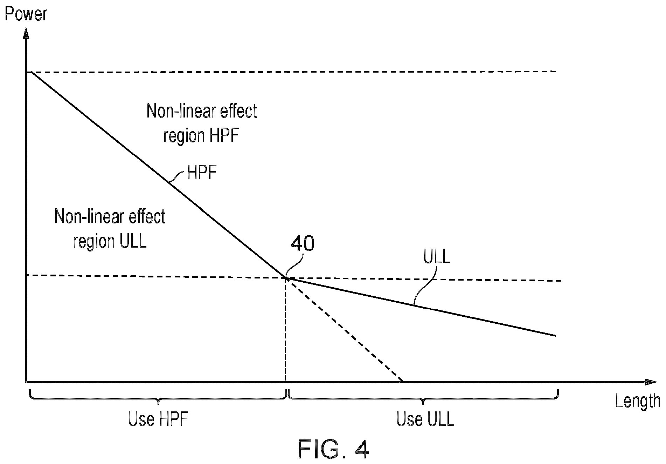

In another example the transport fiber on the forward path from the interrogator to the sensing fiber is a combination of high power fiber (HPF) and ultra low loss (ULL) fiber, with the point at which the fiber is changed from high power fiber to ultra low loss fiber being dependent on the respective loss rates and the length of the transport fiber. In this regard, high power fiber (such as Corning^{®} Metrocor^{®} fiber available from Corning Inc, NY, USA) allows significantly more light to be launched before the onset of non-linear effects (which distort the signal) than is possible with standard fibre. Roughly, it is optimum for the first ~50km of the transport fiber to be of this high power type. High power fiber such as Metrocor^{®} fiber typically has a higher loss than standard fibre (Metrocor^{®} has a 0.20dB/km cf 0.18dB/km for standard fiber), but the high power handling properties more than compensate for this at the beginning where the optical power is highest. Low loss fibre is then used for remainder of the umbilical optical path. Corning^{®} SMF-28^{®} ULL is an example fibre (which has losses of about ~0.16dB/km). Further details will be described later with respect to Figures 3 and 4.

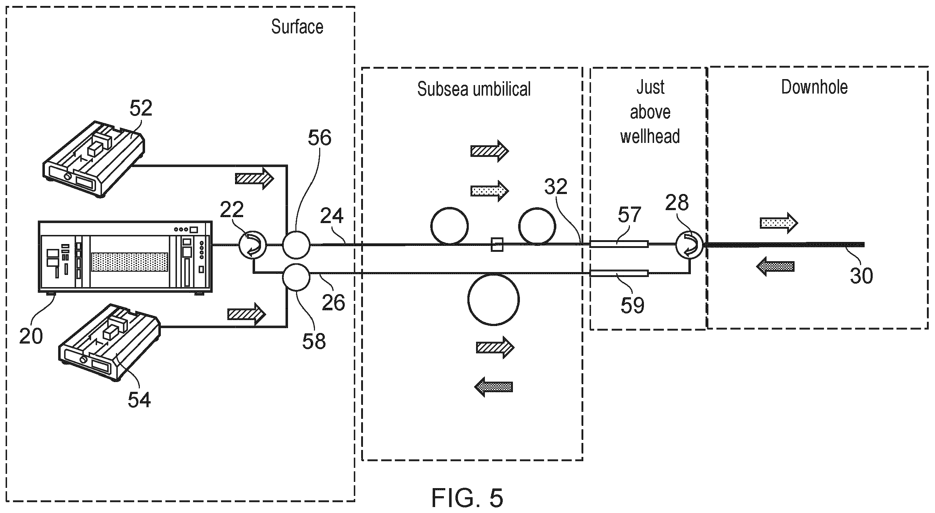

In a further example which may be combined with either of the above two examples, optical fiber amplifiers are placed in line in the forward and/or return paths to amplify the outward bound sensing pulses and/or returning signal. In addition, doped fiber pump sources (DPFS) are further provided, to provide pump optical energy to power the fiber amplifiers. Further details will be described later with respect to Figure 5.

In a yet further example which may be combined with any of the above examples, Raman pump sources may be provided to inject Raman pump light onto the forward and/or return paths of the transport fiber(s). The Raman pump light on the forward path may be continuous or pulsed and synchronised with the sensing pulses so as to co-propagate along the transport fiber therewith. The Raman pump light on the return path may be continuous so as to stimulate the pseudo continuous reflections and backscatter travelling back to the interrogator. The Raman pump light acts via the process of stimulated Raman scattering to help maintain the power of the sensing pulses as they travel along the transport fiber in the forward direction to the sensing fiber, and also to help maintain the power of the backscatter and reflections as they travel back along the transport fiber on the return path to the interrogator.

In some examples that use Raman pump light for amplification, filters to filter out any excess Raman pump light may be provided at the far end of the transport fiber where the transport fiber is connected (usually via an optical circulator) to the sensing fiber. This prevents any unused Raman pump light from entering the optical circulator and components downstream thereof (including any amplifiers that may be included in the signal path) and potentially overloading those components and thereby causing damage.

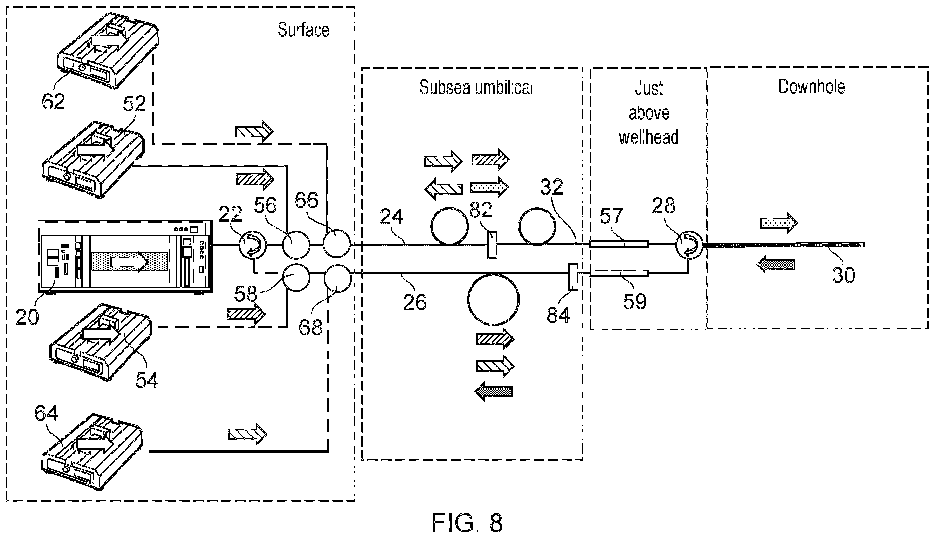

In a further variant of the above example, either or both of the forward and return paths may be provided with a Bragg grating, or other wavelength selective reflector, which reflects the continuous wave Raman pump light back along the transport fiber towards the pump source. On the outbound path this causes sensing pulses to co-propagate with the section of the continuous Raman light, drawing power from that part of the Raman pump light, whilst at the same time counter propagating against earlier emitted Raman pump light which has been reflected back from the grating. When deployed downhole, the use of a pump wavelength reflector also provides a protection for a wellhead wet-mat connector as it cuts off the pump power reaching the connector termination end, thus avoiding potential connector damage. Further details will be described below with respect to Figures 8 to 13.

Turning now to the specific examples to be described, Figure 2 shows a first embodiment, wherein an optical fiber sensor interrogator 20, which may be an optical fiber distributed acoustic sensor such as a Silixa^{®} iDAS^{™} or the like, available from Silixa Ltd, Hertfordshire, UK, is provided, having an output port on which sensing pulses are output to an optical fiber, which is connected to the first port of a first optical circulator 22. A second port of the optical circulator 22 has connected to it an outward optical fiber 24, to act as the outward path of the transport fiber, which transports pulses from the interrogator 20 to a first port of a second optical circulator 28. Connected to a second port of the second optical circulator 28 is the sensing fiber 30, which is deployed within the environment in which sensing is to be undertaken. The sensing fiber may be provided with weak reflectors along its length, as described in our earlier patent application no. WO2016/142695.

The optical fiber sensor may be an optical fiber distributed acoustic sensor (DAS) or an optical fiber distributed temperature sensor (DTS). In particular, where the sensor is a DAS, it may be a DAS sensor of the type described in our earlier application WO2016/142695 which makes use of a sensing optical fiber having very weak reflectors distributed along its length at the desired sensing spatial resolution. As explained in WO2016/142695, the number of reflectors is inversely related to the reflectivity of the reflectors, for a given acceptable level of cross-talk, in that more reflector points can be provided when the reflectivity of the reflector points is lower. Moreover, for a given number of reflectors, the reflectivity of those reflectors is also related to the desired or allowable cross-talk, in that if a higher cross-talk is acceptable, then a higher reflectivity can be used. Thus, when specifying a fiber for a particular application, the number of sensing points can first be specified, based on the sensing length of the fiber (i.e. the length over which sensing needs to take place), and the desired spatial resolution which in turn defines the spacing between the reflectors. Then, having determined the number of reflectors needed (in dependence on the desired length of fiber over which sensing needs to take place and the desired spatial resolution over that length), an acceptable level of cross-talk can then be specified, which in turn then allows the reflectivity of the reflectors to be determined, in accordance with the graphed functions shown in Figures 35 and 36 of WO2016/142695.

Reflections and backscatter from along the sensing fiber, and caused by the sensing pulses travelling along the sensing fiber in the outbound direction, travel back to the second port of the second optical circulator 28, and are then directed out of a third port of the second optical circulator 28, onto a return part of the transport fiber, for example a return fiber 26. The return fiber 26 then transports the reflections and backscatter back to the first optical circulator 22, and is connected to a third port of the first optical circulator 22, and then directed back out of the first port of the first optical circulator 22, to be input back into the interrogator 20. Within the interrogator the backscatter and reflections can be processed as known in the art and as described in our earlier patent applications WO2010/0136809 and WO2016/142695 to determine any acoustic signal at the sensing resolution for each part of the optical sensing fiber. That is, the interrogator will have a spatial sensing resolution, referred to as the gauge length, typically, 10m, or 5 m, but in some cases as low as 1m, and an acoustic signal can be resolved from each contiguous length of sensing fiber corresponding to the gauge length.

The output stage of the interrogator usually contains an optical circulator and, if wished, the interrogator could be configured to have the internal optical circulator removed such that the interrogator has two optical connections; one for the outbound optical path and one for the return optical path. In this case, optical circulator 22 is not required, with optical circulator 28 then performing the function of the internal circulator, which has been removed. This arrangement has the advantage of removing two optical circulators, with the associated optical losses.

In use the interrogator outputs sensing pulses to the optical circulator 22, the sensing pulses travel along the outbound transport fiber 24, and are directed via the second optical circulator 28 into the sensing fiber. Reflections and backscatter from along the sensing fiber are then directed via the second optical circulator 28 onto the return transport fiber 26, which then carries them to the third port of the first optical circulator 22, which then outputs them back into the interrogator for processing.

As shown in the Figure, in this example the sensing fiber may be located well away from the interrogator 20, for example downhole in a subsea well, with the second optical circulator being located at the wellhead. The transport fiber 24, 26 is then contained within a subsea umbilical cable, which may stretch for many kilometres, for example up to or over 50km. This umbilical cable then connects into the interrogator, which is maintained at the surface, for example on a surface vessel or rig. With such an arrangement, therefore, long-range sensing can be provided, at significant distances from the interrogator.

In terms of the operation of the interrogator, because no sensing is being performed along the transport fiber(s) and only along the length of the sensing fiber, then the sensing pulse repetition rate can be set in dependence only on the length of the sensing fiber, and not on the total length of the sensing fiber and the transport fiber. In this respect, for proper sensing there should be a single sensing pulse in the sensing fiber at once, so that it is clear from where along the fiber reflections and backscatter are being received. However, where the sensing fiber is much shorter than the transport fiber then multiple sensing pulses may be propagating along different parts of the transport fiber to the sensing fiber at the same time, separated by at least the length of the sensing fiber (allowing for the same propagation speed in the transport fiber and the sensing fiber). This allows the pulse repetition rate to be maintained at the same rate as if the sensing fiber was directly connected to the interrogator, and hence the sensing bandwidth of the whole sensor system is maintained. This is a significant difference from the arrangement described in our previous WO2016/087850, where the sensing bandwidth was much reduced by treating the whole extended fiber length as sensing fiber. Quantitatively, where the transport fiber is x times the length of the sensing fiber, then a train of up to x pulses may travel in the transport fiber simultaneously, separated by the sensing fiber length.

Figure 3 shows a further example, which is based on the above example, and hence corresponding parts will not be described again. In this example, however, the outbound transport fiber is split into two parts, with a first part 24 being formed from high power fiber (HPF), and a second part 32 being formed from ultra low loss (ULL) fiber 32. As mentioned previously, and as discussed further below, the use of high power fiber as the first part of the outbound transport fiber allows a higher power pulse to be injected into the transport fiber without non-linear distortion effects being induced, which in turn leads to a higher power pulse being injected into the sensing fiber, and hence higher signal to noise ratio being obtained.

The return transport fiber 26 is all ultra low loss fiber, as in use this fiber carries the backscatter and reflections from the sensing fiber, which by definition are low power.

In terms of where the switch-over from HPF to ULL fiber should take place on the forward transport fiber, this should be the point where the power level has reached the non-linear threshold level for the following length of ULL fiber. Figure 4 illustrates the principle in further detail, and shows respective loss rates (not to scale) of HPF and ULL fiber respectively, represented by the gradients of each power curve. The nonlinear threshold power for the HPF and ULL fibers are shown by the horizontal dotted lines, the HPF fiber having a higher non-linear threshold than the ULL fiber.

As shown further by Figure 4, using HPF as the first part of the transport fiber path on the outward path to the sensing fiber from the interrogator means that a higher power pulse can be injected onto the fiber, without inducing non-linear distortion. However, due to the higher loss per km of the HPF there will be a crossover point 40, depending on the total length of the transport fiber path, where if HPF was continued beyond that point the pulse signal power delivered into the sensing fiber would be lower than if HPF fiber had not been used at all . From this crossover point, therefore, it is then beneficial to use ULL fiber, to minimise further losses in the transport fiber. However, if the length of the transport fiber is such that HPF fiber can be used for all of its length i.e. is shorter than the length of the crossover point, then the use of HPF will allow sensing pulses of greater power to be delivered into the sensing fiber than if ULL or standard fiber had been used for the entire length of the transport fiber path.

Effectively, the use of HPF and a higher power injected pulse can compensate for the attenuation of the HPF section of the transport fiber path (depending on the length of transport fiber, and the loss rate of the HPF), and deliver optimum pulse power to the sensing fiber to the limits as if the sensing fiber is directly connected to the interrogator.

Turning now to Figure 5, another example is shown. Here the example of Figure 5 builds upon the example of Figure 4, but adds in at least one optical fiber amplifier into at least one of the forward or return path of the transport fiber. In the specific example shown a respective optical fiber amplifier 57 and 58 is added into the forward and return paths respectively of the transport fiber i.e. a respective fiber amplifier 57 is included in series with the forward fiber 32 and another respective fiber amplifier 59 is included in series with the return fiber 26. In the example shown the amplifiers are positioned at the far end of the transport fiber(s) path in front of the sensing fiber in the outward direction. This is because this is the position at which the outward sensing pulses are weakest after having traversed the entire length of the outbound transport fiber path, and hence amplification here to bring the pulses back up to, or closer to, or exceeding their original amplitudes and power has the most effect. For the backscattered signal, it is beneficial to minimize noise to position the amplifier close to the point of signal generation, as shown in the example. To drive the amplifiers doped fiber pump sources 52 and 54 are respectively provided, with pump source 52 being multiplexed onto the forward transport fiber 24 via wavelength division multiplexer 56, and with pump source 54 being multiplexed onto the return transport fiber 26 via wavelength division multiplexer 58.

In one example the optical fiber amplifiers may be erbium doped fiber amplifiers, which are pumped by the pump sources 54 and 56 at 1480 nm, and amplify light at the sensing pulse wavelength of 1550nm, and thereby act to amplify the sensing pulses on the forward path to the sensing fiber, and the backscatter and reflections on the return path back to the interrogator. It is expected that the powers from each of the pumped lasers sources can be controlled and optimised independently, as is required to optimally amplify the sensing pulses on the forward transport path and the weaker quasi-continuous reflected light on the return transport path.

The doped fibre properties may also be different for the forward and return light paths; for example the doped fiber amplifiers may have different lengths. Also, a WDM and mirror may be placed after the doped fibre such that any pump light passing through the doped fibre is reflected back and so acts to increase the doped fibre pumping, as described later.

The operation of the Figure 5 embodiment is the same as the previously described embodiments, but with the forward and return paths along the transport fiber(s) amplified by the fiber amplifiers. This helps to maintain the forward pulse and return signal levels, and hence improve the signal to noise ratio.

Figure 6 shows the next example. This builds upon the Figures 3 and 4 embodiments described previously, but adds in at least one Raman pump source on at least one of the forward and/or return transport fiber paths. In the particular example of Figure 6 a respective Raman pump source 62 or 64 is provided on each of the outbound and return paths of the transport fiber(s), multiplexed onto the outbound or return paths as appropriate by a respective wavelength division multiplexer 66 or 68. The Raman pump sources operate at near 1455nm, which is a suitable pump wavelength to then obtain Raman amplification at the preferred sensing pulse wavelength of 1550nm. Note that, although the reflected light should be amplified with a continuous wave (CW) source, it is possible to use a pulsed source for the outward pump light, such that the pump pulse and sensing pulse co-propagate. This has the advantage of reducing total optical power for laser safety and optical damage considerations.

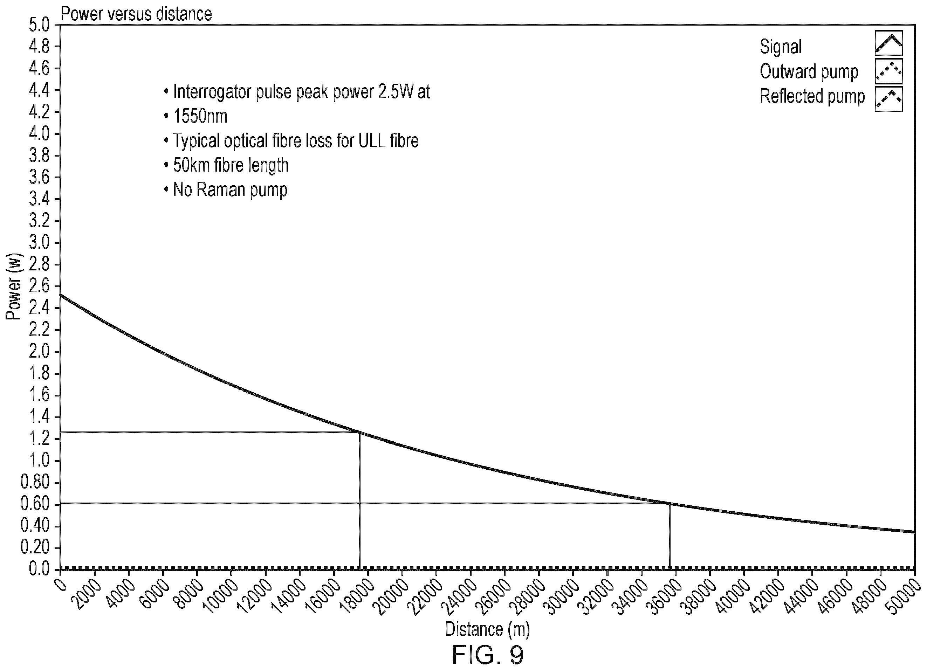

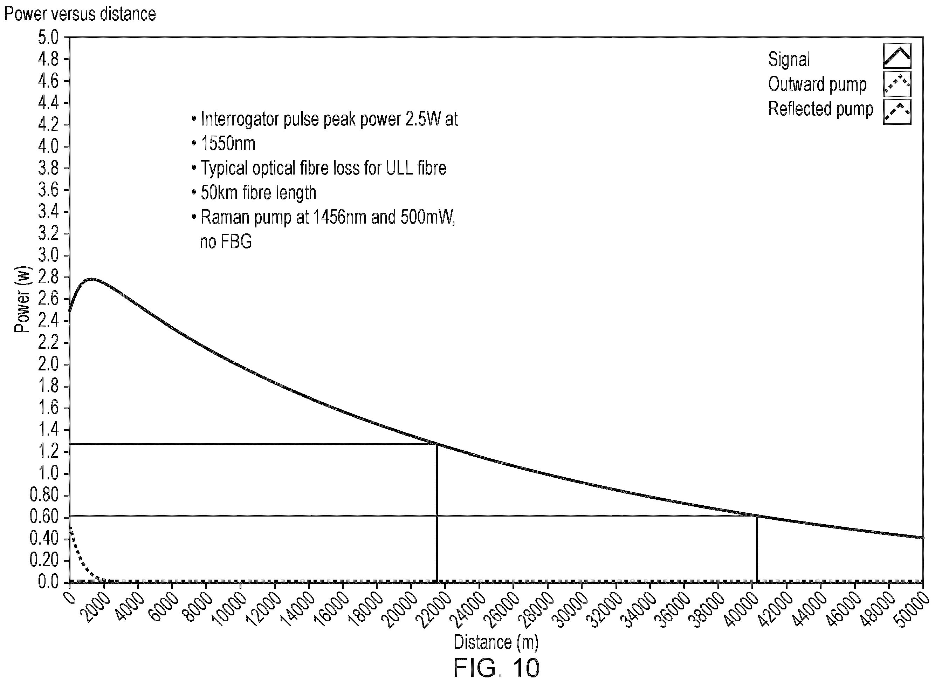

The effect of Raman amplification as shown in Figure 6 is shown by considering Figures 9 and 10 together. Figure 9 illustrates the instantaneous power in a sensing pulse as it propagates along the transport fiber to the sensing fiber, assuming an initial instantaneous peak power on first pulse injection onto the fiber of 2.5W. As can be seen, as the pulse propagates along the outward transport fiber it suffers losses, such that half the power (-3dB) is lost by approximately 17.5km from the interrogator, and then a further half of the available power (-6dB) by approximately 35.5km from the interrogator.

Figure 10 next shows the instantaneous pulse power of sensing pulses travelling along the transport fiber with Raman amplification, specifically using a 500mW Raman pulse at 1456nm, interacting with a 2.5W peak power sensing pulse at 1550nm. In this case as the sensing pulse power is already significantly larger than the Raman pulse power then the available pump light is very quickly used up and the power in the Raman pulse absorbed into the sensing pulse within the first 2000m or so. However, that has the effect of boosting the signal pulse power to above that of originally injected, from ~2.5W to ~2.8W, at ~2000m out. The pulse power then decays from that point as it propagates along the transport fiber, but the half power (-3dB) point is extended out to ~ 21.5 km i.e.by about 4 km, and the next half power (quarter power) point (-6dB) is then even further out at ~41000m. Hence, using Raman amplification of the forward pulse in this manner extends the range and possible length of the transport fiber, by about 15%.

In some examples that make use of Raman pump amplification, some provision may need to be made to prevent unused pump light from entering the wellhead connector assembly, specifically to prevent high powers entering the wellhead connector assembly. In particular, in order to prevent overloading optical componentry in the wellhead it may be necessary to prevent the entry of the high power pump light used either as the Raman pump or to stimulate the erbium doped fibre; this light is a different wavelength from the actual optical sensing pulses themselves.

One way to do this is shown in the example of Figure 18, which is the same arrangement as shown in Figure 6, but which adds in filters 184 and 182 in the transport fiber forward and return paths in order to absorb the Raman pump light. The filters 184 and 182 have a wavelength characteristic such that the filters' respective stop bands are at and around the Raman pump wavelength. Such filters should be placed just above the wellhead, so allowing amplification along the umbilical (transport fiber) but not letting the Raman pump light enter the wellhead connector. Referring to figure 18, filters 184 and 182 respectively are provided at the two umbilical inputs (i.e. transport fiber forward path 32 and return path 26) to the circulator 28 at the wellhead. Note, strictly, we do not need the return path filter 182 at the return transport fiber path connection to the circulator 28, as the circulator itself prevents Raman pump light going from the return umbilical fibre 26 to the wellhead (it operates to route unused Raman pump light back down the forward transport fiber 32), but providing a suitable high-power filter 182 here operates to protect the circulator from damage, in addition to the downhole components downstream of the circulator. The forward path transport fiber 32 should, in this example, always have the filter 182 to filter out unused Raman pump light from entering the optical circulator 28, however, as the arrangement of the optical circulator is such that any such unused Raman pump light will then be directed onto the sensing fiber downhole and may overload any other optical components.

Note that the optical filters 184 and 182, and at least the optical filter 184 in the forward path to the optical circulator, may be used in any of the examples described herein as a precaution to protect the optical circulator 32 and downhole componentry, even if not explicitly described in each example.

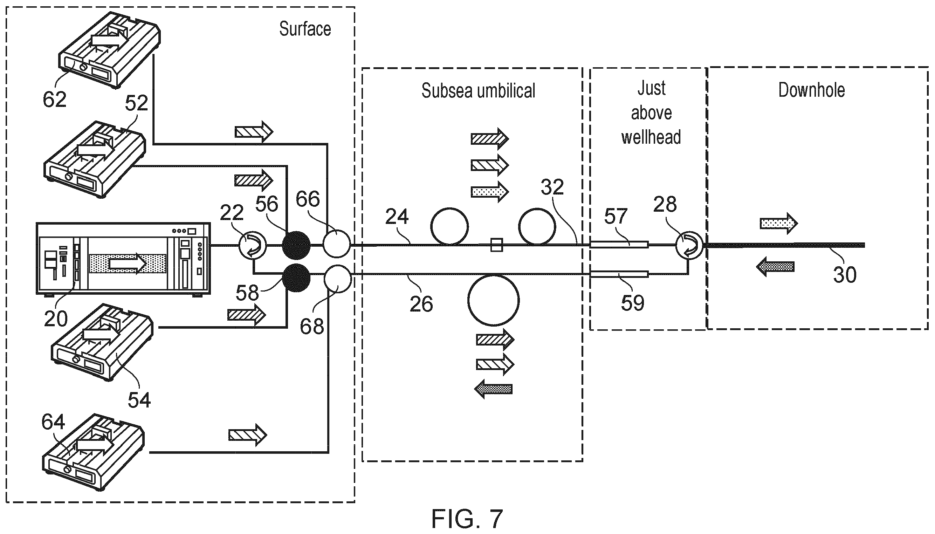

The next example of Figure 7 combines together the examples of Figures 5 and 6, such that both Raman amplification and optical fiber amplification of the outward sensing pulse and the pseudo-continuous backscatter and reflections is performed, to provide extended range and increased signal to noise ratio. Moreover, various modifications can be made to such an arrangement. For example, instead of using separate pump lasers for forward and return paths in the transport fiber, only one of each of the pump sources may be used, with the light sent to the two paths using couplers, and the power controlled independently for each path using attenuators. Using such a scheme, it would also be possible to use a single WDM (of appropriate wavelength selection) rather than two WDMs per path.

In addition, it is also possible to use a single wavelength pump source to achieve both Raman and doped fibre gain. For example, 1455nm wavelength achieves both functions though is not optimum for optical fiber amplifier (specifically erbium doped fiber amplifier (EDFA) gain).

As a further modification, the performance of the amplification system may be further improved by ensuring polarisation diversity in the pumping arrangement.

In addition, for shorter ranges, or where lower SNR is acceptable, the various elements of the system can be independently removed as desired. For example, for ranges of ~25km, it may be desired not to use the doped fibre amplification option.

Moreover, if electrical power is available at the wellhead, it is possible to position the doped fibre pump lasers at the wellhead. This allows more light to pump the doped fibre as the pump light is not then subject to the transport fiber loss.

In addition, as described previously with respect to Figure 18, in some examples it can be beneficial to prevent unused Raman pump light from transiting the optical circulator 28 and entering the sensing fiber 30. Whilst as described previously this can be undertaken by the inclusion of optical filters with a stop band specifically at the Raman pump wavelength inserted in the forward and return transport fibers, in another example the doped fiber amplifiers 57 and 59 can be used to absorb the Raman pump light instead, and thereby stop it transiting the circulator 28. Specifically, it is possible to design the doped fibre amplifiers 57 and 59 such that they will absorb the Raman pump light, to thereby prevent it entering the wellhead. To achieve this effect the doped fibre should be chosen with a dopant concentration and length such that it will substantially absorb the Raman pump light so as to prevent it entering the wellhead.

With respect to the design and properties of the fiber amplifiers 57 and 59 to achieve the above effect i.e. to absorb the Raman pump light whilst still amplifying the forward optical signal pulses, there are many ways that the fiber amplifier can be configured to achieve the desired wavelength selectivity, by appropriate selection of glass host (i.e. which glass the fiber amplifier is formed from), and dopant concentration profile along the length of the fiber amplifier, as well as the inclusion of appropriately tuned Bragg gratings, if necessary, to enhance wavelength rejection, for example at the Raman pump wavelength. Such techniques for the precise wavelength tuning of erbium doped fiber amplifiers to give a desired optical wavelength pass band characteristic are well known in the art, and hence may employed to give the desired wavelength characteristic for the amplifiers 57 and 59 i.e. to provide for amplification of the optical signal sensing pulses provided by the DAS interrogator 20, but to suppress and/or reject the Raman pump light at the Raman amplification wavelength generated by the Raman pump sources 62 and 64.

Turning now to Figure 8, a further example is shown. This example is based on the example of Figure 7, and includes both Raman amplification of the forward sensing pulse and the pseudo-continuous backscatter and reflections, and optical fiber amplification of the same. However, in addition, in order to improve the Raman amplification that is obtained, two wavelength selective reflectors that reflect at the Raman pump wavelength but not at the sensing pulse wavelength, nor the optical fiber amplifier pump wavelength, are included, one in each of the forward path and return path of the transport fiber(s). In particular, in this example in the forward path a reflective grating 82 such as a Fiber Bragg Grating (FBG) is placed at the junction of the high power fiber 24 and the ULL fiber 32. In the return path a similar grating 84 is included at the far end of the transport fiber from the interrogator i.e. just before the optical fiber amplifier 59 positioned just in front of the sensing fiber 30. The effect of the inclusion of these reflective gratings is as follows.

As described above with respect to Figure 10, the forward going Raman amplification (amplification of the sensing pulse) does not give much gain due to rapid pump depletion - it only gives a small gain of a few dB in our implementation. The backward (backscatter and reflection) Raman amplification does indeed give significant gain, however. The reason for this is that Raman amplification is usually used when the signal (here the sensing pulse) power is much lower than the Raman pump power. With the backscatter light, this is indeed the case as the returning light is much less than 1mW, whereas the Raman pump light is around 500mW. This allows the pseudo continuous backscatter and reflection signal light to grow appreciably without drawing significant power from the pump signal (which causes pump depletion). For example, neglecting losses, if the pseudo continuous back scatter and reflection signal starts at 10uW and the Raman pump signal at 500mW, then, through conservation of energy, it is possible for the signal to grow 50,000x before the pump is exhausted (though note in practice the gain will be much lower).

However, with a DAS, although the average launched power can also be low, in or below the mW range, the power inside an individual pulse is much higher and typically in the range of a few W, and so of the same order of magnitude as the pump. This means that as the Raman pump and sensing pulse co-propagate in the forward direction along the transport fiber, power is rapidly drawn from the Raman pump to the sensing pulse, causing significant Raman pump depletion. From conservation of energy, it is not possible for the signal power of the sensing pulse to gain more power than is in the Raman pump signal, and so the amount of available gain is very limited. For example, if the sensing pulse starts at 2.5W and the Raman pump at 0.5W, the maximum the sensing pulse can grow to is just 3W (ignoring any losses) - a modest increase.

There is a small additional gain from wavelength dispersion, such that the sensing pulse benefits from extracting energy from a fresh portion of the pump light due to pump and sensing pulse wavelength "walk off". In practice though, this benefit will be very small. For example, between a sensing pulse at 1550nm and a pump pulse at 1456nm, the dispersion will be around 1.5ns/km. This means, over say 50km of fibre, the sensing pulse can extract energy from an extra 75ns of pump light in addition to the initial pulse width of around 50ns. Although useful, this will not make a significant difference to the ultimate performance.

In order to resolve this, by efficiently amplifying the outward light, we place an FBG reflector 82 (or a WDM and mirror) at some point along the outward transport fiber which reflects the Raman pump light but passes through the sensing pulse light. This then gives the same amplification principle as the backscatter case above: now the Raman pump light counter propagates against the sensing pulse such that the sensing pulse is always passing through a fresh portion of Raman pump signal, meaning that Raman pump depletion is negligible. In this way, a significant amplification is achievable. Note, the outward sensing pulse would still also get the small benefit it currently receives from co-propagating with the Raman pulses, as described previously with respect to Figure 10.

The FBG 82 could be located at a convenient place, such as at an umbilical termination assembly (where lengths of umbilicals join), at the wellhead, or could be written into the umbilical transport fibre itself. The use of a pump wavelength reflector also provides a protection for the wellhead wet-mat connector as it cuts off the pump power reaching the connector termination end, thus avoiding potential connector damage. Our modelling indicates, for the powers we use, the FBG would optimally be placed within around 25km to 35km (optimum value dependent on fibre losses and pump power) from the interrogator. So, for example with a transport fiber 75km long, it would be beneficial to have the FBG at 25km - 35km rather than at the end of the transport. This is because we need sufficient energy in the Raman pump to amplify the sensing pulse.

In another embodiment, there could be a series of weak FBGs, rather than just one, with the reflectivities tuned along the length to maximise power delivery at the far end. There is also a smaller benefit in similarly having an FBG reflector in the backscatter path (as also shown in Figure 8). Here the advantage is to recycle pump light which would otherwise exit the fibre and be lost. Alternatively, WDMs could be used to recycle the forward path pump into the return path and vice versa.

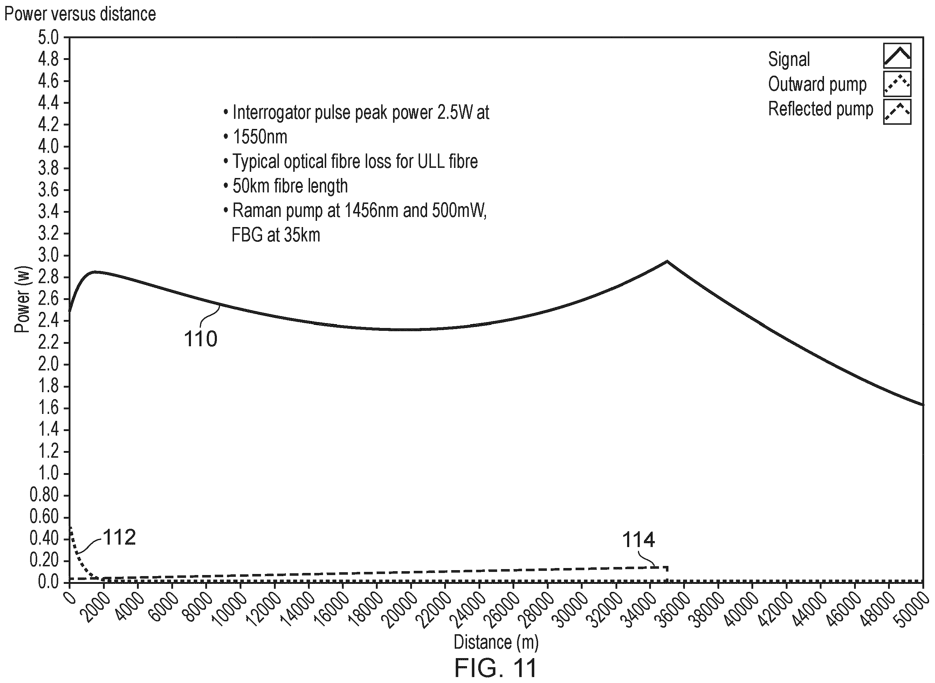

Figures 11, 12, and 13 illustrate the effects of using the FBG 82 in the forward path of the transport fiber. Looking first at Figure 11, here the FBG 82 is included in the forward path of the transport fiber at 35km from the interrogator, and a continuous wave Raman pump of 500mW is used. As can be seen from the red line (112), as described previously, the section of forward pump light which co-propagates with the sensing pulse is absorbed by the forward co-propagating sensing pulse very rapidly, within the first 2 km or so, and this has the effect of raising the instantaneous power of the sensing pulse by approximately the same amount (in practice slightly less due to practical losses). The far larger section of pump light which does not co-propagate with the sensing pulse (equivalent to the entire fibre length up to the reflector of 35km, minus the sensing pulse width of around 5m) is not absorbed and so propagates all the way to the FBG 82, and this is then reflected back. At this point the near continuous reflected Raman pump light (continuous excepting the small ~5m section depleted by the sensing pulse) counter propagates against the next sensing pulse(s), such that it presents at the Raman stimulation wavelength a "fresh" ie undepleted pump light which can be used to stimulate emission at the sensing pulse wavelength. Note that there is minimal depletion of this reflected pump light even in the case of there being multiple sensing pulses propagating in the transmission fiber. This is because the *average* sensing pulse power is of the order of mW, or below, whereas the pump optical energy is much larger and of the order of 100s of mW. This is in contrast to the co-propagating condition where it is the *peak* sensing pulse power (in the W range) which is relevant in calculating depletion rather than the *average* sensing pulse power (in the mW range). The effect of this counter propagating pump light substantially maintains the instantaneous power of the sensing pulse, as shown by curve 110 in Figure 11.

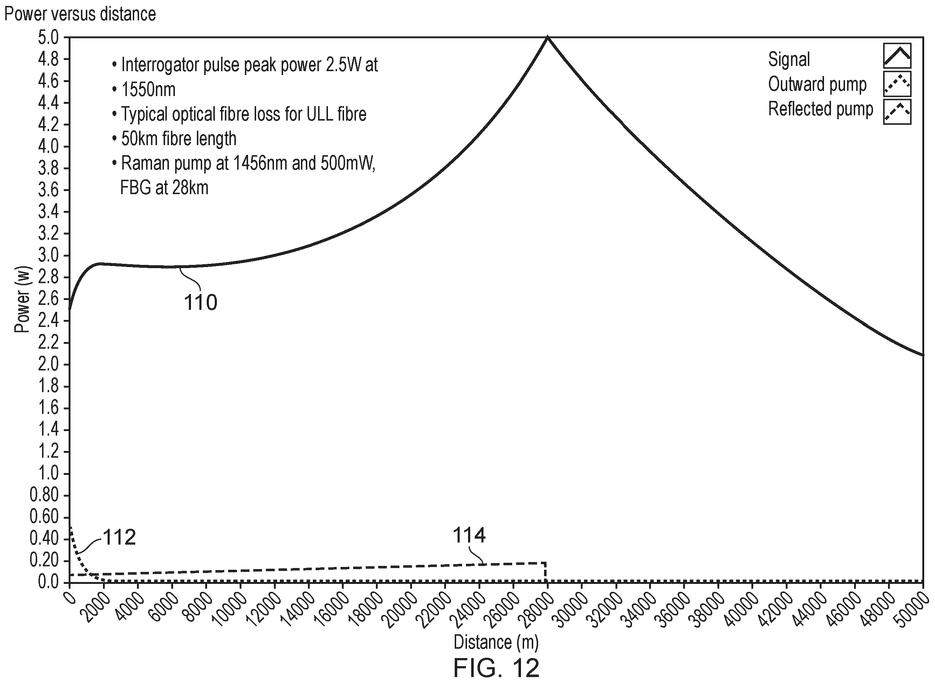

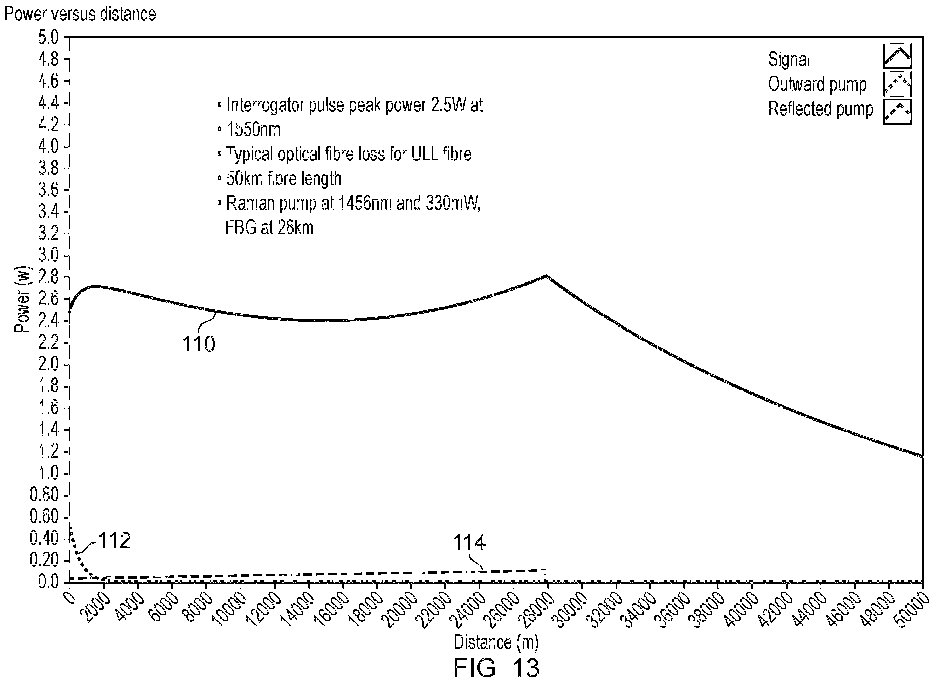

Figure 12 shows the same simulation as Figure 11, but with the difference that the FBG 82 is brought further back along the forward path of the transport fiber towards the interrogator, and hence is only at 28km, but of the same power, 500mW. The effect of this is that the reflected counter propagating Raman pump light is even stronger, and hence stimulates a stronger emission at the sensing pulse wavelength, such that the instantaneous power of the sensing pulse increases substantially up to the location of the grating 82. In fact, the stimulated emission as a result of the counter-propagating Raman pump light in this case is so strong that the sensing pulse probably enters the non-linear propagation region where non-linear power effects occur. Therefore, in order to address this issue, the power of the pump light can be reduced, as shown in Figure 13. Here, a 330mW pump is used with a reflector at 28km, and the power of the sensing pulse is maintained within the linear propagation region of 2.5W or less.

The important point of the results shown in Figures 11 and 13, however, are to compare the instantaneous sensing pulse power at the end of transport fiber 50km from the interrogator with the case shown in Figure 9, where no Raman stimulation is used. In Figure 9, at 50 km the signal power has dropped from 2.5W to about 0.4W. In contrast, within Figures 11 and 13, at 50km the signal power is in the range 1.4 to 1.6 W, and hence still retains much of its original power, and certainly enough to be of use in the sensing fiber. The use of the counter propagating Raman pump amplification therefore helps to maintain the power in the sensing pulses as they travel along the transport fiber, and prevents them from becoming too depleted so as to be of much use in generating backscatter and reflections in the sensing fiber.

Figures 14 to 17 shows various further modifications to the above described examples that can be made to provide further examples. For example, Figure 14 presents a stylised view of the example of Figure 6, where Raman amplification is provided by way of two Raman pump sources 62 and 64. Figure 15 then shows a modification to the arrangement, in which a single Raman pump source 62 and a single optical fiber amplifier pump source 52 64 are both coupled into the optical circuit via a 50:50 coupler 152 and two wavelength division multiplexers 66 and 68, as shown. That is WDM 66 is provided in the forward transport fiber path, and WDM 68 is provided in the return transport fiber path, and the respective outputs of 50:50 coupler 152 are connected to the respective Raman pump source 62 and optical fiber amplifier pump source 52. This has the consequence of each of the single pump sources operating at different wavelengths to feed both of the forward and return transport fiber paths simultaneously, from a single source of each wavelength. As such, the component count of such an arrangement is reduced. In these configurations, the amount of pump light of each wavelength launched into each of the transmission and return paths can be tuned through the use of a coupler with a different split ratio and/or through the addition of attenuators.

Figures 16 and 17 show two slightly different modifications that can be used to ensure that any unused Raman pump light is captured and fed back into the transport fibers. In Figure 16 a pair of wavelength division multiplexers which discriminate the Raman pulse from the sensing pulse are provided at the far end of the transport fibers from the interrogator, in front of circulator 28. Specifically WDM 162 is provided in the forward path of the transport fiber, and WDM 164 in the return path. These WDMs then have the effect of directing Raman light that is propagating along the forward path of the transport fiber onto the return path, and vice versa ie directing Raman light that has propagated to the end of the return path (counter propagating against the returning back scatter and reflections from the sensing fiber) into the forward path so as to counter propagate against the forward sensing pulses. Figure 17 shows a similar arrangement, but here a reflector 172 is provided to which the WDMs 162 and 164 direct the Raman light. The Raman light is then reflected back down the same path (ie forward or return transport fiber path) down which it originally propagated. The same advantage as Figure 16 is obtained, in that no Raman pump light is allowed to escape into the sensing fiber and go unused.

## Claims

1. A long-range optical fiber distributed sensor system, comprising:
an optical source arranged in use to produce optical sensing pulses;
a sensing optical fiber (30) deployable in use in an environment to be sensed and arranged in use to receive the optical sensing pulses; and
sensing apparatus (20) arranged in use to detect light from the optical sensing pulses reflected and/or backscattered back along the sensing optical fiber (30) and to determine any one or more of an acoustic, vibration, temperature or other parameter that perturbs the path length of the sensing optical fiber (30) in dependence on the reflected and/or backscattered light;
at least one transport fiber path (24,26) arranged between the sensing optical fiber (30) and the optical source to transport the optical sensing pulses from the optical source to the sensing fiber (30) and to transport backscatter and/or reflections from along the sensing fiber (30) back to the sensing apparatus;
the system being **characterised in that**:
the optical source is controlled to produce optical sensing pulses at a pulse repetition rate that is dependent on the length of the sensing optical fiber (30) and not the length of the transport fiber (24,26);
the transport fiber (24,26) is longer than the sensing optical fiber (30) and the optical sensing pulse repetition rate is such that a plurality of optical sensing pulses propagate along the transport fiber (24,26) towards the sensing optical fiber (30) simultaneously; and
the pulse repetition rate is set at a rate such that a single optical sensing pulse propagates in the sensing optical fiber (30) at any one time.

2. A long-range optical fiber distributed sensor system according to claim 1, wherein the transport fiber (24,26) comprises a forward transport fiber (24) arranged to convey optical sensing pulses from the optical source to the sensing optical fiber (30), and a return transport fiber (26) arranged to convey back scatter and/or reflections from the sensing optical fiber (30) back to the interrogator (20).

3. A long-range optical fiber distributed sensor system according to any of claims 1 to 2, wherein the forward transport fiber path (24) comprises at least a first part formed of high power handling fiber (24).

4. A long-range optical fiber distributed sensor system according to claim 3, wherein the forward transport fiber (24) further comprises a second part formed of low loss fiber (32), the first and second parts (24, 32) being arranged in series.

5. A long-range optical fiber distributed sensor system according to claims 3 or 4, wherein the respective lengths of the first part (24) and the second part (32) are determined in dependence on the respective nonlinear threshold of the high power handling fiber (24) and the low loss fiber (32).

6. A long-range optical fiber distributed sensor system according to claim 5, wherein high power handling fiber (24) has a higher loss rate than the low loss fiber (32), and the length of the first part (24) corresponds to a length of high power fiber (24) that for an input optical sensing pulse of a first power propagates that pulse until it reaches the same power level as would have been achieved had low loss fiber (32) been used for the first part with the input optical sensing pulse being of a second power lower than the first power, the first and second power levels being those power levels such that pulse propagation would occur in the respective fiber types without causing non-linear distortion effects.

7. A long-range optical fiber distributed sensor system according to any of claims 1 to 6, and further comprising an optical fiber amplifier (57,59) arranged in series with the transport fiber (24,26), and an optical fiber amplifier pump source (52,54) arranged to provide pump light to the optical fiber amplifier (57,59), the optical fiber amplifier (57,59) arranged in use to amplify the forward optical sensing pulses and/or the returning backscatter and/or reflections.

8. A long-range optical fiber distributed sensor system according to claim 7 when dependent on claim 2, wherein a separate optical fiber amplifier (57,59) is provided on each of the forward and return transport fibers (24,26).

9. A long-range optical fiber distributed sensor system according to claim 8, wherein a respective optical fiber amplifier pump source (52,54) is provided for the respective optical fiber amplifiers (57,59), wherein the pump source (54) for the optical fiber amplifier (59) on the return transport fiber (26) provides a continuous wave pump signal, whereas the pump source (52) for the optical fiber amplifier (57) on the forward transport fiber (24) provides a pulsed pump signal that co-propagates with the forward optical sensing pulses.

10. A long-range optical fiber distributed sensor system according to any of claims 1 to 9, and further comprising a Raman pump light source (62,64) arranged to provide Raman pump light into the transport fiber (24,26), the Raman pump light being arranged to interact with the optical sensing pulses and/or the reflections and/or backscatter from the sensing optical fiber (30) to increase the power of the optical sensing pulses and/or the reflections and/or backscatter.

11. A long-range optical fiber distributed sensor system according to claim 10, wherein a separate Raman pump light source (62,64) is provided for each of the forward and return transport fibers (24,26).

12. A long-range optical fiber distributed sensor system according to claim 11, wherein the Raman pump light source (64) for the return transport fiber (26) provides a continuous wave pump signal, and the Raman pump light source (62) for the forward transport fiber (24) provides a continuous Raman pump signal a part of which co-propagates with the forward optical sensing pulses.

13. A long-range optical fiber distributed sensor system according to any of claims 1 to 12, wherein the sensor is an optical fiber distributed acoustic sensor or an optical fiber distributed temperature sensor.

## Patentansprüche

1. Ein verteiltes faseroptisches Sensorsystem mit großer Reichweite, umfassend: eine optische Quelle, die im Gebrauch dazu eingerichtet ist, optische Erfassungsimpulse zu erzeugen;
eine optische Erfassungsfaser (30), die im Gebrauch in einer zu erfassenden Umgebung einsetzbar ist und im Gebrauch dazu eingerichtet ist, die optischen Erfassungsimpulse zu empfangen; und
eine Erfassungsvorrichtung (20), die im Gebrauch dazu eingerichtet ist, Licht von den optischen Erfassungsimpulsen zu detektieren, das entlang der optischen Erfassungsfaser (30) zurückreflektiert und/oder rückgestreut wird, und in Abhängigkeit von dem reflektierten und/oder rückgestreuten Licht einen oder mehrere beliebige akustische Parameter, Schwingungsparameter, Temperaturparameter oder andere Parameter zu bestimmen, welche die Weglänge der optischen Erfassungsfaser (30) stören;
mindestens einen Transportfaserpfad (24,26), der angeordnet ist zwischen der optischen Erfassungsfaser (30) und der optischen Quelle, um die optischen Erfassungsimpulse von der optischen Quelle zu der Erfassungsfaser (30) zu transportieren und um entlang der Erfassungsfaser (30) entstehende Rückstreuung und/oder Reflexionen zurück zu der Erfassungsvorrichtung zu transportieren;
wobei das System **dadurch gekennzeichnet ist, dass**:
die optische Quelle gesteuert wird, um optische Erfassungsimpulse mit einer Impulswiederholrate zu erzeugen, die abhängig ist von der Länge der optischen Erfassungsfaser (30) und nicht von der Länge der Transportfaser (24,26);
die Transportfaser (24,26) länger ist als die optische Erfassungsfaser (30) und die Wiederholrate der optischen Erfassungsimpulse derart ist, dass sich eine Vielzahl von optischen Erfassungsimpulsen gleichzeitig ausbreitet entlang der Transportfaser (24,26) in Richtung der optischen Erfassungsfaser (30); und
die Impulswiederholrate auf eine solche Rate eingestellt ist, dass sich zu jedem Zeitpunkt ein einzelner optischer Erfassungsimpuls in der optischen Erfassungsfaser (30) ausbreitet.

2. Ein verteiltes faseroptisches Sensorsystem mit großer Reichweite gemäß Anspruch 1, wobei die Transportfaser (24,26) eine Vorwärtstransportfaser (24) umfasst, die dazu eingerichtet ist, optische Erfassungsimpulse von der optischen Quelle zu der optischen Erfassungsfaser (30) zu leiten, und eine Rücktransportfaser (26), die dazu eingerichtet ist, Rückstreuung und/oder Reflexionen von der optischen Erfassungsfaser (30) zurück zu dem Abfragegerät (20) zu leiten.

3. Ein verteiltes faseroptisches Sensorsystem mit großer Reichweite gemäß irgendeinem der Ansprüche 1 bis 2, wobei der Vorwärtstransportfaserpfad (24) mindestens einen ersten Teil umfasst, der aus einer Faser mit hoher Leistungsbelastbarkeit (24) gebildet ist.

4. Ein verteiltes faseroptisches Sensorsystem mit großer Reichweite gemäß Anspruch 3, wobei die Vorwärtstransportfaser (24) ferner einen zweiten Teil umfasst, der aus einer verlustarmen Faser (32) gebildet ist, wobei der erste und der zweite Teil (24, 32) in Reihe angeordnet sind.

5. Ein verteiltes faseroptisches Sensorsystem mit großer Reichweite gemäß den Ansprüchen 3 oder 4, wobei die jeweiligen Längen des ersten Teils (24) und des zweiten Teils (32) bestimmt werden in Abhängigkeit von der jeweiligen nichtlinearen Schwelle der Faser mit hoher Leistungsbelastbarkeit (24) und der verlustarmen Faser (32).

6. Ein verteiltes faseroptisches Sensorsystem mit großer Reichweite gemäß Anspruch 5, wobei die Faser mit hoher Leistungsbelastbarkeit (24) eine höhere Verlustrate hat als die verlustarme Faser (32), und die Länge des ersten Teils (24) einer Länge einer Hochleistungsfaser (24) entspricht, die einen optischen Eingangserfassungsimpuls einer ersten Leistung ausbreitet, bis dieser Impuls denselben Leistungspegel erreicht, der erreicht worden wäre, wenn für den ersten Teil eine verlustarme Faser (32) verwendet worden wäre, wobei der optische Eingangserfassungsimpuls eine zweite Leistung aufgewiesen hätte, die niedriger ist als die erste Leistung, wobei der erste und der zweite Leistungspegel diejenigen Leistungspegel sind, bei denen eine Impulsausbreitung in den jeweiligen Fasertypen erfolgen würde, ohne nichtlineare Verzerrungseffekte zu verursachen.

7. Ein verteiltes faseroptisches Sensorsystem mit großer Reichweite gemäß irgendeinem der Ansprüche 1 bis 6, und ferner umfassend einen optischen Faserverstärker (57, 59), der in Reihe mit der Transportfaser (24, 26) angeordnet ist, und eine Pumpquelle (52,54) für optische Faserverstärker, die dazu eingerichtet ist, dem optischen Faserverstärker (57,59) Pumplicht bereitzustellen, wobei der optische Faserverstärker (57,59) im Gebrauch dazu eingerichtet ist, die vorwärtslaufenden optischen Erfassungsimpulse und/oder die zurücklaufende Rückstreuung und/oder Reflexionen zu verstärken.

8. Ein verteiltes faseroptisches Sensorsystem mit großer Reichweite gemäß Anspruch 7, wenn dieser von Anspruch 2 abhängt, wobei ein separater optischer Faserverstärker (57, 59) vorgesehen ist auf jeder der Vorwärts- und Rücktransportfasern (24, 26).

9. Ein verteiltes faseroptisches Sensorsystem mit großer Reichweite gemäß Anspruch 8, wobei eine jeweilige Pumpquelle (52, 54) für optische Faserverstärker vorgesehen ist für die jeweiligen optischen Faserverstärker (57, 59), wobei die Pumpquelle (54) für den optischen Faserverstärker (59) auf der Rücktransportfaser (26) ein Dauerstrich-Pumpsignal bereitstellt, wohingegen die Pumpquelle (52) für den optischen Faserverstärker (57) auf der Vorwärtstransportfaser (24) ein gepulstes Pumpsignal bereitstellt, das sich gemeinsam mit den vorwärtslaufenden optischen Erfassungsimpulsen ausbreitet.

10. Ein verteiltes faseroptisches Sensorsystem mit großer Reichweite gemäß irgendeinem der Ansprüche 1 bis 9, und ferner umfassend eine Raman-Pumplichtquelle (62, 64), die dazu eingerichtet ist, Raman-Pumplicht in die Transportfaser (24, 26) einzuspeisen, wobei das Raman-Pumplicht dazu eingerichtet ist, mit den optischen Erfassungsimpulsen und/oder den Reflexionen und/oder der Rückstreuung von der optischen Erfassungsfaser (30) wechselzuwirken, um die Leistung der optischen Erfassungsimpulse und/oder der Reflexionen und/oder der Rückstreuung zu erhöhen.

11. Ein verteiltes faseroptisches Sensorsystem mit großer Reichweite gemäß Anspruch 10, wobei eine separate Raman-Pumplichtquelle (62, 64) vorgesehen ist für jede der Vorwärts- und Rücktransportfasern (24, 26).

12. Ein verteiltes faseroptisches Sensorsystem mit großer Reichweite gemäß Anspruch 11, wobei die Raman-Pumplichtquelle (64) für die Rücktransportfaser (26) ein Dauerstrich-Pumpsignal bereitstellt, und die Raman-Pumplichtquelle (62) für die Vorwärtstransportfaser (24) ein kontinuierliches Raman-Pumpsignal bereitstellt, von dem sich ein Teil gemeinsam mit den vorwärtslaufenden optischen Erfassungsimpulsen ausbreitet.

13. Ein verteiltes faseroptisches Sensorsystem mit großer Reichweite gemäß irgendeinem der Ansprüche 1 bis 12, wobei der Sensor ein verteilt messender faseroptischer Akustiksensor ist oder ein verteilt messender faseroptischer Temperatursensor.

## Revendications

1. Un système de capteur distribué à fibre optique à longue portée, comprenant :
une source optique agencée en utilisation pour produire des impulsions optiques de détection ;
une fibre optique de détection (30) déployable en utilisation dans un environnement à détecter et agencée en utilisation pour recevoir les impulsions optiques de détection ; et
un appareil de détection (20) agencé en utilisation pour détecter de la lumière provenant des impulsions optiques de détection réfléchies et/ou rétrodiffusées en retour le long de la fibre optique de détection (30) et pour déterminer un ou plusieurs paramètres quelconques acoustiques, de vibration, de température ou autres qui perturbent la longueur de trajet de la fibre optique de détection (30) en fonction de la lumière réfléchie et/ou rétrodiffusée ;
au moins un trajet de fibre de transport (24, 26) agencé entre la fibre optique de détection (30) et la source optique pour transporter les impulsions optiques de détection de la source optique à la fibre de détection (30) et pour transporter la rétrodiffusion et/ou les réflexions produites le long de la fibre de détection (30) en retour vers l'appareil de détection ;
le système étant **caractérisé en ce que** :
la source optique est commandée pour produire des impulsions optiques de détection à une fréquence de répétition des impulsions qui dépend de la longueur de la fibre optique de détection (30) et non de la longueur de la fibre de transport (24, 26) ;
la fibre de transport (24, 26) est plus longue que la fibre optique de détection (30) et la fréquence de répétition des impulsions optiques de détection est telle qu'une pluralité d'impulsions optiques de détection se propagent simultanément le long de la fibre de transport (24, 26) vers la fibre optique de détection (30) ; et la fréquence de répétition des impulsions est réglée à une fréquence telle qu'une seule impulsion optique de détection se propage dans la fibre optique de détection (30) à tout instant.

2. Un système de capteur distribué à fibre optique à longue portée selon la revendication 1, dans lequel la fibre de transport (24, 26) comprend une fibre de transport aller (24) agencée pour acheminer des impulsions optiques de détection de la source optique à la fibre optique de détection (30), et une fibre de transport retour (26) agencée pour acheminer la rétrodiffusion et/ou les réflexions provenant de la fibre optique de détection (30) en retour vers l'interrogateur (20).

3. Un système de capteur distribué à fibre optique à longue portée selon l'une quelconque des revendications 1 à 2, dans lequel le trajet de fibre de transport aller (24) comprend au moins une première partie formée d'une fibre supportant une puissance élevée (24).

4. Un système de capteur distribué à fibre optique à longue portée selon la revendication 3, dans lequel la fibre de transport aller (24) comprend en outre une seconde partie formée d'une fibre à faibles pertes (32), les première et seconde parties (24, 32) étant agencées en série.

5. Un système de capteur distribué à fibre optique à longue portée selon les revendications 3 ou 4, dans lequel les longueurs respectives de la première partie (24) et de la seconde partie (32) sont déterminées en fonction du seuil non linéaire respectif de la fibre supportant une puissance élevée (24) et de la fibre à faibles pertes (32).

6. Un système de capteur distribué à fibre optique à longue portée selon la revendication 5, dans lequel la fibre supportant une puissance élevée (24) a un taux de perte plus élevé que la fibre à faibles pertes (32), et la longueur de la première partie (24) correspond à une longueur de fibre haute puissance (24) qui, pour une impulsion optique de détection d'entrée d'une première puissance, propage cette impulsion jusqu'à ce qu'elle atteigne le même niveau de puissance que celui qui aurait été atteint si une fibre à faibles pertes (32) avait été utilisée pour la première partie, l'impulsion optique de détection d'entrée étant d'une seconde puissance inférieure à la première puissance, les premier et second niveaux de puissance étant les niveaux de puissance pour lesquels la propagation d'impulsions se produirait dans les types de fibres respectifs sans provoquer d'effets de distorsion non linéaires.

7. Un système de capteur distribué à fibre optique à longue portée selon l'une quelconque des revendications 1 à 6, et comprenant en outre un amplificateur à fibre optique (57, 59) agencé en série avec la fibre de transport (24, 26), et une source de pompe d'amplificateur à fibre optique (52, 54) agencée pour fournir de la lumière de pompe à l'amplificateur à fibre optique (57, 59), l'amplificateur à fibre optique (57, 59) étant agencé en utilisation pour amplifier les impulsions optiques de détection aller et/ou la rétrodiffusion et/ou les réflexions de retour.

8. Un système de capteur distribué à fibre optique à longue portée selon la revendication 7 lorsqu'elle dépend de la revendication 2, dans lequel un amplificateur à fibre optique séparé (57, 59) est prévu sur chacune des fibres de transport aller et retour (24, 26).

9. Un système de capteur distribué à fibre optique à longue portée selon la revendication 8, dans lequel une source de pompe d'amplificateur à fibre optique respective (52, 54) est prévue pour les amplificateurs à fibre optique respectifs (57, 59), dans lequel la source de pompe (54) pour l'amplificateur à fibre optique (59) sur la fibre de transport retour (26) fournit un signal de pompe à onde continue, tandis que la source de pompe (52) pour l'amplificateur à fibre optique (57) sur la fibre de transport aller (24) fournit un signal de pompe pulsé qui se copropage avec les impulsions optiques de détection aller.

10. Un système de capteur distribué à fibre optique à longue portée selon l'une quelconque des revendications 1 à 9, et comprenant en outre une source de lumière de pompe Raman (62, 64) agencée pour fournir de la lumière de pompe Raman dans la fibre de transport (24, 26), la lumière de pompe Raman étant agencée pour interagir avec les impulsions optiques de détection et/ou les réflexions et/ou la rétrodiffusion provenant de la fibre optique de détection (30) pour augmenter la puissance des impulsions optiques de détection et/ou des réflexions et/ou de la rétrodiffusion.

11. Un système de capteur distribué à fibre optique à longue portée selon la revendication 10, dans lequel une source de lumière de pompe Raman séparée (62, 64) est prévue pour chacune des fibres de transport aller et retour (24, 26).

12. Un système de capteur distribué à fibre optique à longue portée selon la revendication 11, dans lequel la source de lumière de pompe Raman (64) pour la fibre de transport retour (26) fournit un signal de pompe à onde continue, et la source de lumière de pompe Raman (62) pour la fibre de transport aller (24) fournit un signal de pompe Raman continu dont une partie se copropage avec les impulsions optiques de détection aller.

13. Un système de capteur distribué à fibre optique à longue portée selon l'une quelconque des revendications 1 à 12, dans lequel le capteur est un capteur acoustique distribué à fibre optique ou un capteur de température distribué à fibre optique.
